# EUROPEAN PATENT APPLICATION

(11) **EP 4 467 371 A1**
(43) Date of publication of application: **27.11.2024**
(21) Application number: 24177232.6
(22) Date of filing: 22.05.2024
(51) Int. Cl.: B60J 1/17

(54) **GUIDE RAIL, GUIDE RAIL ASSEMBLY, AND VEHICLE**

(30) Priority: 23.05.2023 CN 202310604222
(71) Applicant: Nio Technology (Anhui) Co., Ltd, Hefei City, Anhui 230601 (CN)
(72) Inventor: WANG, Feng, Hefei City, Anhui, 230601 (CN); XING, Xiancai, Hefei City, Anhui, 230601 (CN); XIAO, Qian, Hefei City, Anhui, 230601 (CN); JIANG, CHAO, Hefei City, Anhui, 230601 (CN); YE, Gang, Hefei City, Anhui, 230601 (CN); KUANG, Wenfeng, Hefei City, Anhui, 230601 (CN); ZHU, Xianxiang, Hefei City, Anhui, 230601 (CN)
(74) Representative: Vossius & Partner Patentanwälte Rechtsanwälte mbB

(57) **Abstract**

The disclosure relates to a guide rail (1), a guide rail assembly (100), and a vehicle. The guide rail (1) comprises: a guide rail body (11), wherein the guide rail body is provided with a guide rail groove (111) extending in a length direction thereof, and the guide rail groove has a bottom wall (112), a first side wall (113) and a second side wall (114) that respectively extend outward from two sides of the bottom wall and are opposite each other, and an opening (115) opposite the bottom wall; and a limiting structure (12), wherein the limiting structure is arranged on the first side wall (113) and/or the second side wall (114) and is configured to extend toward the opening (115) and close a part of the opening. According to the guide rail of the disclosure, a part of the opening (115) can be closed by the limiting structure (12), thereby preventing a sealing strip (2) from falling off from the opening of the guide rail body (111).

## Description

### TECHNICAL FIELD

The disclosure relates to the field of vehicles, and in particular to a guide rail, a guide rail assembly, and a vehicle.

### BACKGROUND ART

A vehicle door glass guide rail assembly is one of the important components of a vehicle door, and has the function of guiding the lifting of glass. A vehicle door glass guide rail generally comprises a guide rail body and a sealing strip arranged inside the guide rail body. The guide rail body is mounted to the vehicle door, and the sealing strip is used for receiving a vehicle door glass.

The existing guide rail body is generally of an open U-shaped structure, and left and right side walls of the guide rail abut against the sealing strip, which can provide only unidirectional limiting in a left-right direction for the sealing strip, resulting in a risk of the sealing strip falling off from an opening of the guide rail body.

Therefore, there is a need for a novel technical solution to solve the problem described above.

### SUMMARY

In order to improve or solve the technical problem in the prior art of a sealing strip easily falling off from an opening of a guide rail body, the disclosure provides a guide rail. The guide rail comprises: a guide rail body, wherein the guide rail body is provided with a guide rail groove extending in a length direction thereof, and the guide rail groove has a bottom wall, a first side wall and a second side wall that respectively extend outward from two sides of the bottom wall and are opposite each other, and an opening opposite the bottom wall; and a limiting structure, wherein the limiting structure is arranged on the first side wall and/or the second side wall and is configured to extend toward the opening and close a part of the opening.

The guide rail of the disclosure comprises the guide rail body and the limiting structure. The guide rail body is provided with the guide rail groove for arranging the sealing strip; the guide rail groove has the bottom wall, and the first side wall and the second side wall that respectively extend outward from two sides of the bottom wall and are opposite each other, so that the guide rail groove is substantially U-shaped and has an opening opposite the bottom wall; and the limiting structure is arranged on the first side wall and/or the second side wall and extends toward the opening, and can close a part of the opening, thereby limiting the sealing strip in the height direction of the guide rail body and preventing the sealing strip from falling off from the opening. By means of the above arrangement, according to the guide rail of the disclosure, a part of the opening can be closed by the limiting structure, thereby preventing the sealing strip from falling off from the opening of the guide rail body.

In another technical solution of the guide rail of the disclosure, the first side wall has a first edge away from the bottom wall; and the limiting structure comprises a claw positioned close to the first edge, and the claw and the first side wall enclose a first limiting groove with an opening facing the bottom wall. By means of the above arrangement, the claw is arranged on the first edge of the first side wall away from the bottom wall, and the claw and the bottom wall can respectively abut against either of opposite sides of the sealing strip in a height direction of the guide rail body, thereby limiting the sealing strip in the height direction of the guide rail body. Moreover, the claw and the first side wall enclose the first limiting groove with the opening facing the bottom wall, and the first limiting groove is used for accommodating an arm of the sealing strip, which can enhance the restriction on the sealing strip by the guide rail body in a width direction and in the height direction, thereby preventing the sealing strip from falling off from the opening of the guide rail body.

In another technical solution of the guide rail of the disclosure, first demoulding slots opposite the claw are provided in the bottom wall. The limiting structure closes a part of the opening, so that it is difficult to manufacture the guide rail body by injection molding. By means of the above arrangement, the first demoulding slots are provided in the bottom wall, so that a demoulding slider matching the claw in shape can be withdrawn from the guide rail body at the bottom wall in a direction away from the claw, so as to facilitate the injection molding of the guide rail body.

In another technical solution of the guide rail of the disclosure, the first demoulding slots are arranged spaced apart in the length direction; and the claw comprise a first claw arm connected to the first side wall, second demoulding slots spaced apart from each other are provided in the first claw arm, and the second demoulding slots and the first demoulding slots are alternately arranged in the length direction. By means of the above arrangement, the second demoulding slots are provided in the first claw arm, and the second demoulding slots and the first demoulding slots are alternately arranged, which can not only keep the first limiting groove continuous in the length direction of the guide rail body, but can also ensure the structural strength of the bottom wall, thereby preventing deformation and damage of the guide rail body.

In another technical solution of the guide rail of the disclosure, third demoulding slots spaced apart from each other are provided in the second side wall, and one of the third demoulding slots corresponds to a corresponding one of the second demoulding slots in the length direction. By means of the above arrangement, the second demoulding slots are provided in the first claw arm, so that a demoulding slider matching the first limiting groove can be withdrawn from the guide rail body in a direction away from the bottom wall; and the third demoulding slots are provided in the second side wall, so that a further demoulding slider matching the above demoulding slider can be withdrawn from the guide rail body in a direction away from the first side wall, and thus it is not necessary to provide any demoulding slot corresponding to the second demoulding slots in the bottom wall, so as to ensure the structural strength of the bottom wall.

In another technical solution of the guide rail of the disclosure, reinforcing ribs are provided on the bottom wall and a side face of the first side wall facing away from the guide rail groove. By means of the above arrangement, the reinforcing ribs are arranged on the bottom wall and the side face of the first side wall facing away from the guide rail groove, which can enhance the structural strength of the guide rail body, thereby preventing deformation and damage of the guide rail body.

In another technical solution of the guide rail of the disclosure, the guide rail further comprises a mounting bracket fixedly connected to the guide rail body, wherein the mounting bracket is adapted to be mounted to a vehicle door. By means of the above arrangement, the mounting bracket is used for fixing the guide rail body to the vehicle door.

In another technical solution of the guide rail of the disclosure, the second side wall has a second edge away from the bottom wall; and the limiting structure comprises a limiting plate positioned close to the second edge, and the limiting plate, the bottom wall and the second side wall enclose a second limiting groove facing the first side wall. By means of the above arrangement, the limiting plate is arranged on the second edge of the second side wall away from the bottom wall, and the limiting plate and the first side wall can respectively abut against either of opposite sides of the sealing strip in the width direction of the guide rail body, thereby limiting the sealing strip in the width direction of the guide rail body. Moreover, the second limiting groove is used for accommodating an arm of the sealing strip, which can enhance the restriction on the sealing strip by the guide rail body in the width direction and in the height direction, thereby preventing the sealing strip from falling off from the opening of the guide rail body.

In another technical solution of the guide rail of the disclosure, fourth demoulding slots opposite the limiting plate are provided in the bottom wall. By means of the above arrangement, the fourth demoulding slots are provided in the bottom wall and are opposite the limiting plate, so that a demoulding slider matching the second limiting groove can be withdrawn from the guide rail body in a direction away from the limiting plate, so as to facilitate the injection molding of the guide rail body.

In order to solve the above technical problem, the disclosure further discloses a guide rail assembly, comprising: a guide rail according to any one of the technical solutions described above; and a sealing strip, wherein the sealing strip is limited in the guide rail groove of the guide rail by the limiting structure of the guide rail. By means of the above arrangement, the sealing strip is limited in the guide rail groove of the guide rail by the limiting structure, so that the sealing strip can be prevented from falling off from the guide rail body, thereby maintaining the lifting stability of vehicle door glass.

In another technical solution of the above guide rail assembly, the guide rail comprises a claw, the guide rail body of the guide rail comprises a bottom wall and a first side wall, and the first side wall and the claw enclose a first limiting groove; and the sealing strip comprises an annular body and a first arm arranged on an outer peripheral wall of the annular body, the first arm is fitted with the first limiting groove, and the bottom wall and the claw respectively abut against either of opposite sides of the annular body in a height direction of the guide rail. By means of the above arrangement, the first arm is accommodated in the first limiting groove, and the bottom wall and the claw respectively abut against either of the opposite sides of the annular body in the height direction of the guide rail, which can enhance the stability of connection between the sealing strip and the guide rail body, thereby maintaining the lifting stability of vehicle door glass.

In another technical solution of the above guide rail assembly, the guide rail further comprises a limiting plate, the guide rail body further comprises a second side wall opposite the first side wall, and the limiting plate, the bottom wall and the second side wall enclose a second limiting groove; and the sealing strip further comprises a second arm arranged on the outer peripheral wall of the annular body, the second arm is fitted with the second limiting groove, and the limiting plate and the first side wall abut respectively against either of opposite sides of the annular body in a width direction of the guide rail. By the above arrangement, the second arm is accommodated in the second limiting groove, and the first side wall and the limiting plate respectively abut against either of the opposite sides of the annular body in the width direction of the guide rail body, which can enhance the stability of connection between the sealing strip and the guide rail body, thereby maintaining the lifting stability of vehicle door glass.

In order to solve the above technical problem, the disclosure further discloses a vehicle, comprising a guide rail assembly according to any one of the technical solutions described above. By means of the above guide rail assembly, according to the disclosure, the sealing strip is prevented from falling off from the opening of the guide rail body, thereby maintaining the lifting stability of vehicle door glass.

### BRIEF DESCRIPTION OF THE DRAWINGS

Preferred implementations of the disclosure are described below with reference to the accompanying drawings, in which:
FIG. 1 is a schematic diagram of an overall structure of an embodiment of a guide rail according to the disclosure;
FIG. 2 is a schematic diagram of a sectional structure of an embodiment of the guide rail according to the disclosure;
FIG. 3 is a schematic diagram of another sectional structure of an embodiment of the guide rail according to the disclosure;
FIG. 4 is a schematic diagram of demoulding of an embodiment of the guide rail according to the disclosure;
FIG. 5 is another schematic diagram of demoulding of an embodiment of the guide rail according to the disclosure; and
FIG. 6 is a schematic diagram of a sectional structure of an embodiment of a guide rail assembly according to the disclosure.

### List of reference signs:

100. Guide rail assembly.
1. Guide rail; 11. Guide rail body; 111. Guide rail groove; 112. Bottom wall; 1121. First demoulding slot; 1122. Fourth demoulding slot; 1123. First reinforcing rib; 11231. Transverse reinforcing rib; 11232. Longitudinal reinforcing rib; 1124. Support protrusion; 113. First side wall; 1131. Second reinforcing rib; 1132. First edge; 114. Second side wall; 1141. Third demoulding slot; 1142. Second edge; 115. Opening; 12. Limiting structure; 121. Claw; 1211. First limiting groove; 1212. First claw arm; 12121. Second demoulding slot; 1213. Second claw arm; 122. Limiting plate; 1221. Second limiting groove; 1222. Guide slope; 13. Mounting bracket; 131. Reinforcing plate; 2. Sealing strip; 21. Annular body; 22. First arm; 23. Second arm; 210. First demoulding arrangement; 211. First demoulding slider; 212. Second demoulding slider; 213. Third demoulding slider; 220. Second demoulding arrangement; 221. Fourth demoulding slider; 222. Fifth demoulding slider.

### DETAILED DESCRIPTION OF EMBODIMENTS

Preferred implementations of the disclosure are described below with reference to the accompanying drawings. Those skilled in the art should understand that these implementations are merely used to explain the technical principles of the disclosure, and are not intended to limit the scope of protection of the disclosure.

It should be noted that, in the description of the disclosure, the terms that indicate the direction or positional relationship, such as "upper", "lower", "left", "right", "inner", and "outer", are based on the direction or positional relationship shown in the figures, which is merely for ease of description instead of indicating or implying that the apparatus or element must have a particular orientation and be constructed and operated in a particular orientation, and therefore, should not be construed as limiting the disclosure. In addition, the terms "first" and "second" are used for descriptive purposes only, and cannot be construed as indicating or implying relative importance.

In addition, it should also be noted that, in the description of the disclosure, the terms "mount", "provide" and "connect" should be interpreted in a broad sense unless explicitly defined and limited otherwise, which, for example, may mean a fixed connection, a detachable connection or an integral connection; and may be a direct connection, an indirect connection by means of an intermediary, or internal communication between two elements. For those skilled in the art, the specific meanings of the foregoing terms in the disclosure can be interpreted according to a specific situation.

In order to improve or solve the technical problem in the prior art of a sealing strip easily falling off from an opening of a guide rail body, the disclosure provides a guide rail. The guide rail 1 comprises: a guide rail body 11, wherein the guide rail body 11 is provided with a guide rail groove 111 extending in a length direction thereof, and the guide rail groove 111 has a bottom wall 112, a first side wall 113 and a second side wall 114 that respectively extend outward from two sides of the bottom wall 112 and are opposite each other, and an opening 115 opposite the bottom wall 112; and a limiting structure 12, wherein the limiting structure 12 is arranged on the first side wall 113 and/or the second side wall 114 and is configured to extend toward the opening 115 and close a part of the opening 115.

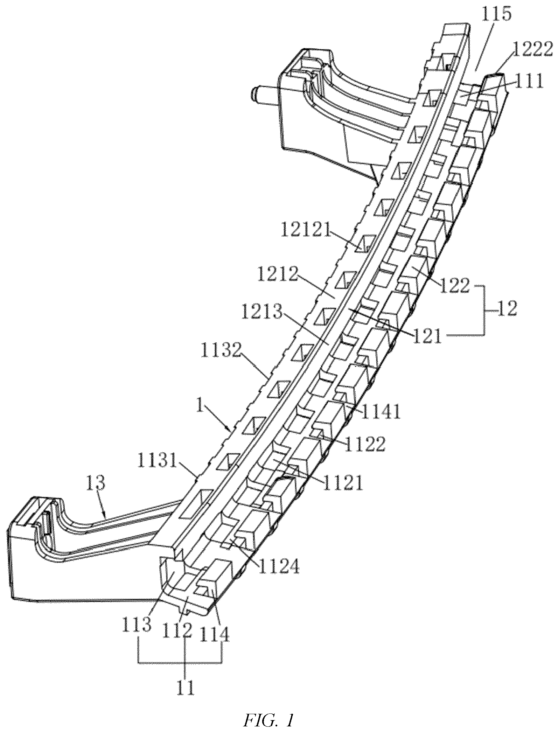

FIG. 1 is a schematic diagram of an overall structure of an embodiment of the guide rail according to the disclosure. As shown in FIG. 1, in one or more embodiments, the guide rail 1 of the disclosure comprises a guide rail body 11, a limiting structure 12, and a mounting bracket 13.

Continuing to refer to FIG. 1, in one or more embodiments, the guide rail body 11 is substantially arc-shaped with a slight outward protrusion in the middle. Alternatively, the guide rail body 11 may also be configured in a straight elongated strip shape or other suitable shapes. In one or more embodiments, the cross section of the guide rail body 11 transverse to the length direction thereof is substantially U-shaped. Alternatively, the cross section of the guide rail body 11 transverse to the length direction thereof may also be configured in other suitable shapes. The guide rail body 11 has a guide rail groove 111 extending in the length direction thereof. The guide rail groove 111 has a bottom wall 112, a first side wall 113, a second side wall 114, and an opening 115. The bottom wall 112 and the opening 115 are opposite each other in a height direction of the guide rail body 11, and the first side wall 113 and the second side wall 114 are opposite each other in a width direction of the guide rail body 11.

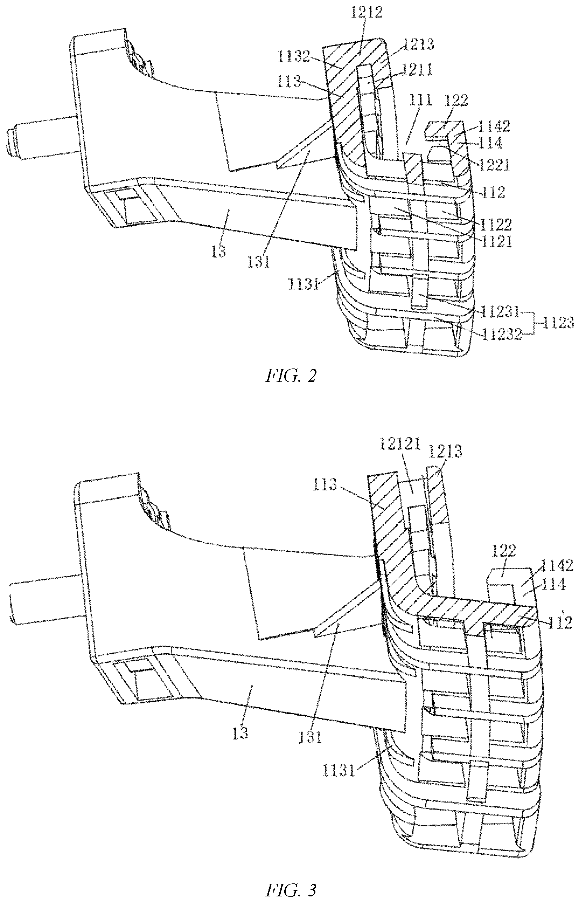

FIG. 2 is a schematic diagram of a sectional structure of an embodiment of the guide rail according to the disclosure. As shown in FIGS. 1 and 2, in one or more embodiments, the bottom wall 112 has first and second lateral sides that are opposite each other. Based on the orientation shown in FIG. 2, the first lateral side is a left lateral side, and the second lateral side is a right lateral side. In one or more embodiments, first demoulding slots 1121 are provided in the bottom wall 112. The first demoulding slots 1121 are positioned close to the first lateral side, and a plurality of first demoulding slots spaced apart in the length direction of the guide rail body 11 are provided. Alternatively, only one first demoulding slot 1121 is provided and extends in the length direction of the guide rail body 11. In one or more embodiments, fourth demoulding slots 1122 are also provided in the bottom wall 112. The fourth demoulding slots 1122 are positioned close to the second lateral side, and a plurality of fourth demoulding slots spaced apart in the length direction of the guide rail body 11 are provided. One of the fourth demoulding slots 1122 and a corresponding one of the first demoulding slots 1121 are arranged side by side in the width direction of the guide rail body 11.

Continuing to refer to FIGS. 1 and 2, in one or more embodiments, the bottom wall 112 has a first side face facing the guide rail groove 111 and a second side face opposite the first side face. In one or more embodiments, support protrusions 1124 are formed on the first side face, the support protrusions 1124 protrude into the guide rail groove 111 and are positioned close to two ends of the first side face, so as to increase the stability of connection between a part and the guide rail body 11. In one or more embodiments, a plurality of support protrusions 1124 are arranged spaced apart in the length direction of the guide rail body 11, and each support protrusion 1124 is arranged between the first demoulding slot 1121 and the fourth demoulding slot 1122. Based on the orientation shown in FIG. 1, three support protrusions 1124 are arranged at a front end of the first side face, and two support protrusions are arranged at a rear end of the first side face. Alternatively, other suitable numbers of support protrusions 1124 may be provided. Alternatively, the support protrusion 1124 extends from one end to the other end of the first side face in the length direction of the guide rail body 11. In one or more embodiments, first reinforcing ribs 1123 are provided on the second side face of the bottom wall 112. The first reinforcing rib 1123 comprises a transverse reinforcing rib 11231 and a longitudinal reinforcing rib 11232 that are criss-crossed. The transverse reinforcing ribs 11231 extend in the length direction of the guide rail body 11 and are arranged between the first demoulding slots 1121 and the fourth demoulding slots 1122. The longitudinal reinforcing ribs 11232 extend in the width direction of the guide rail body 11 and extend from the first lateral side to the second lateral side of the bottom wall 112. In one or more embodiments, a plurality of longitudinal reinforcing ribs 11232 spaced apart in the length direction of the guide rail body 11 are provided, and each of the longitudinal reinforcing ribs 11232 is arranged between adjacent first demoulding slots 1121.

Continuing to refer to FIGS. 1 and 2, in one or more embodiments, the first side wall 113 is arranged on the first lateral side of the bottom wall 112 and extends outward from the bottom wall 112. The first side wall 113 has a first side face facing the guide rail groove 111 and a second side face opposite the first side face. Second reinforcing ribs 1131 are provided on the second side face of the first side wall 113. The second reinforcing ribs 1131 has a structure that is substantially the same as the first reinforcing ribs 1123. In one or more embodiments, the first side wall 113 has a first edge 1132 away from the bottom wall 112, and the first edge 1132 is used for connection to the limiting structure 12.

FIG. 3 is a schematic diagram of another sectional structure of an embodiment of the guide rail according to the disclosure. As shown in FIGS. 1 and 3, in one or more embodiments, the second side wall 114 is arranged on the second lateral side of the bottom wall 112 and extends outward from the bottom wall 112, and the height of the second side wall 114 is lower than that of the first side wall 113. Alternatively, the second side wall 114 may be arranged on the first lateral side of the bottom wall 112, and correspondingly, the first side wall 113 may be arranged on the second lateral side of the bottom wall 112. In one or more embodiments, third demoulding slots 1141 are provided in the second side wall 114. The third demoulding slots 1141 are arranged spaced apart in the length direction of the guide rail body 11, and are alternately arranged with the first demoulding slots 1121 in the length direction of the guide rail body 11, such that the second side wall 114 is divided into a plurality of segments in the length direction of the guide rail 1. Alternatively, the third demoulding slots 1141 may also be provided in the first side wall 113. In one or more embodiments, the second side wall 114 has a second edge 1142 away from the bottom wall 112, and the second edge 1142 is used for connection to the limiting structure 12.

Continuing to refer to FIGS. 1 and 2, in one or more embodiments, the limiting structure 12 comprises a claw 121 mounted to the first edge 1132. The claw 121 and the first side wall 113 enclose a first limiting groove 1211. Alternatively, the claw 121 may also be configured to be of other suitable structures, as long as the structure can extend toward the opening 115 and close a part of the opening 115. In one or more embodiments, the claw 121 comprises a first claw arm 1212 and a second claw arm 1213. The first claw arm 1212 is connected to the first edge 1132 and extends toward the opening 115 in the width direction of the guide rail body 11. The second claw arm 1213 is connected to the first claw arm 1212 and extends toward the bottom wall 112 in the height direction of the guide rail body 11. In one or more embodiments, second demoulding slots 12121 are provided in the first claw arm 1212. The second demoulding slots 12121 and the first demoulding slots 1121 are alternately arranged in the length direction of the guide rail body 11, and one of the second demoulding slots 12121 corresponds to a corresponding one of the third demoulding slots 1141 in the length direction of the guide rail body 11.

Continuing to refer to FIGS. 1 and 2, in one or more embodiments, the limiting structure 12 comprises a limiting plate 122 mounted to the second edge 1142. The limiting plate 122 extends toward the first side wall 113 in the width direction of the guide rail 1, and encloses a second limiting groove 1221 with the second side wall 114 and the bottom wall 112. Alternatively, the limiting plate 122 may also be configured to be of other suitable structures, as long as the structure can extend toward the opening 115 and close a part of the opening 115. In one or more embodiments, a plurality of segments of the limiting plate 122 spaced apart in the length direction of the guide rail body 11 are provided. One segment of the limiting plate 122 is connected to a corresponding segment of the second side wall 114 to form a substantially claw-like shape. In one or more embodiments, a guide slope 1222 is provided on a part of the limiting plate 122, and the guide slope 1222 facilitates the insertion of a part into the guide rail groove 111 from one end of the guide rail body 11. Based on the orientation shown in FIG. 1, the guide slope 1222 faces the rear end of the guide rail body 11, and is arranged on each of the first segment of the limiting plate 122 from the rear end and the third segment of the limiting plate 122 from the front end. Alternatively, the guide slope 1222 may also be provided on another part of the limiting plate 122.

Continuing to refer to FIGS. 1 and 2, in one or more embodiments, the mounting bracket 13 is integrally injection molded with the guide rail body 11. Alternatively, the mounting bracket 13 may be fixedly connected to the guide rail body 11 by bonding, welding, etc. after the guide rail body 11 is injection molded. In one or more embodiments, two mounting brackets 13 are provided. In the length direction of the guide rail body 11, two mounting brackets 13 are respectively positioned close to two ends of the guide rail body 11. Alternatively, three, four or other suitable numbers of mounting brackets 13 may be provided. In one or more embodiments, the mounting bracket 13 is arranged on the second side face of the first side wall 113. A reinforcing plate 131 is provided between the mounting bracket 13 and the first side wall 113 so as to enhance the strength of connection between the mounting bracket 13 and the first side wall 113. In one or more embodiments, a bolt are provided on an extension end of the mounting bracket 13 away from the first side wall 113, and the mounting bracket 13 is adapted to be mounted to a vehicle door by means of the bolt. Alternatively, the mounting bracket 13 may be mounted to the vehicle door by bonding or other suitable means. In one or more embodiments, waterproof foam is provided on the extension end of the mounting bracket 13, and the waterproof foam is used for enhancing the performance of sealing between the mounting bracket 13 and the vehicle door.

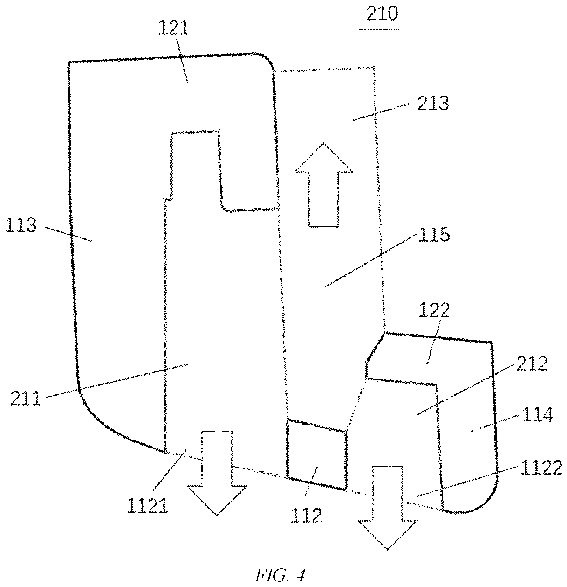

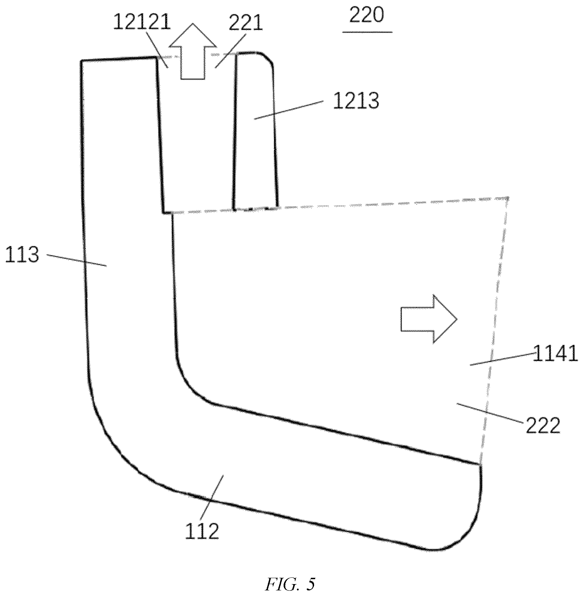

FIG. 4 is a schematic diagram of demoulding of an embodiment of the guide rail according to the disclosure, and FIG 5 is another schematic diagram of demoulding of an embodiment of the guide rail according to the disclosure. Since the claw 121 and the limiting plate 122 both extend toward the opening 115, the guide rail 1 forms a semi-closed structure, thereby making it difficult to demould after injection. As shown in FIGS. 4 and 5, the demoulding principle of the guide rail 1 according to the disclosure is to adopt an alternating demoulding structure. The demoulding structure comprises first demoulding arrangements 210 and second demoulding arrangements 220 that are alternately arranged in the length direction of the guide rail body 11.

Referring to FIG. 4, in one or more embodiments, the first demoulding arrangement 210 comprises a first demoulding slider 211, a second demoulding slider 212, and a third demoulding slider 213. The first demoulding slider 211 matches the claw 121 and the first side wall 113 and can be withdrawn from the guide rail body 11 at the first demoulding slot 1121. The second demoulding slider 212 matches the second limiting groove 1221 and can be withdrawn from the guide rail body 11 at the fourth demoulding slot 1122. The third demoulding slider 213 is arranged between the first demoulding slider 211 and the second demoulding slider 212, and can be withdrawn from the guide rail body 11 at the opening 115 between the claw 121 and the limiting plate 122. Based on the orientation in FIG. 4, the first demoulding slider 211 and the second demoulding slider 212 move downward to be withdrawn from the guide rail body 11; and the third demoulding slider 213 moves upward to be withdrawn from the guide rail body 11.

Referring to FIG. 5, in one or more embodiments, the second demoulding arrangement 220 comprises a fourth demoulding slider 221 and a fifth demoulding slider 222. The fourth demoulding slider 221 matches the first limiting groove 1211 and can be withdrawn from the guide rail body 11 at the second demoulding slot 12121. The fifth demoulding slider 222 is arranged between the fourth demoulding slider 221 and the bottom wall 112, and can be withdrawn from the guide rail body 11 at the third demoulding slot 1141. Based on the orientation shown in FIG. 5, the fourth demoulding slider 221 moves upward to be withdrawn from the guide rail body 11; and the fifth demoulding slider 222 moves to the right to be withdrawn from the guide rail body 11.

In order to improve or solve the technical problem in the prior art of a sealing strip easily falling off from an opening of a guide rail body, the disclosure provides a guide rail assembly. The guide rail assembly 100 comprises: a guide rail 1 as described above; and a sealing strip 2, wherein the sealing strip 2 is limited in the guide rail groove 111 of the guide rail 1 by the limiting structure 12 of the guide rail 1.

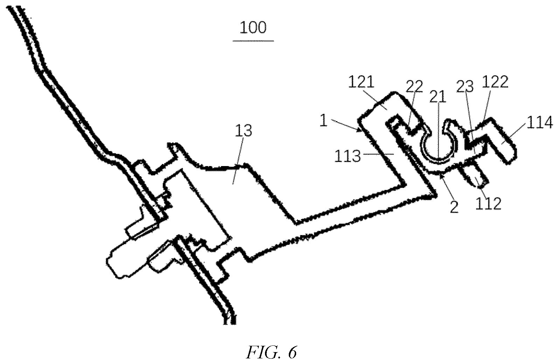

FIG. 6 is a schematic diagram of a sectional structure of an embodiment of a guide rail assembly according to the disclosure. As shown in FIGS. 1, 2 and 6, the guide rail assembly 100 of the disclosure comprises a guide rail 1 and a sealing strip 2 arranged in the guide rail groove 111 of the guide rail 1. In one or more embodiments, the sealing strip 2 comprises an annular body 21, and a first arm 22 and a second arm 23 that are arranged on the annular body 21. The annular body 21 has an opening extending in the length direction of the guide rail 1, and the opening facilitates the insertion of the vehicle door glass into the annular body 21. In one or more embodiments, the first arm 22 extends in the height direction of the guide rail body 11 and is fitted with the first limiting groove 1211. Based on the orientation shown in FIG. 6, when the first arm 22 is inserted into the first limiting groove 1211, the bottom wall 112 abuts against a lower side of the annular body 21, and the second claw arm 1213 abuts against an upper side of the annular body 21. In one or more embodiments, the second arm 23 extends in the width direction of the guide rail body 11 and is fitted with the second limiting groove 1221. Based on the orientation shown in FIG. 6, when the second arm 23 is inserted into the second limiting groove 1221, the first side wall 113 abuts against a left side of the annular body 21, and the limiting plate 122 abuts against a right side of the annular body 21.

In order to improve or solve the technical problem in the prior art of a sealing strip easily falling off from an opening of a guide rail body, the disclosure provides a vehicle. The vehicle comprises the guide rail assembly 100 as described above. The vehicle may be any suitable electric vehicle, hybrid electric vehicle, etc.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A guide rail, comprising:
a guide rail body, wherein the guide rail body is provided with a guide rail groove extending in a length direction thereof, and the guide rail groove has a bottom wall, a first side wall and a second side wall that respectively extend outward from two sides of the bottom wall and are opposite each other, and an opening opposite the bottom wall; and
a limiting structure, wherein the limiting structure is arranged on the first side wall and/or the second side wall and is configured to extend toward the opening and close a part of the opening.

2. The guide rail according to claim 1, wherein the first side wall has a first edge away from the bottom wall; and
the limiting structure comprises a claw positioned close to the first edge, and the claw and the first side wall enclose a first limiting groove with an opening facing the bottom wall.

3. The guide rail according to claim 2, wherein first demoulding slots opposite the claw are provided in the bottom wall.

4. The guide rail according to claim 3, wherein the first demoulding slots are arranged spaced apart in the length direction; and
the claw comprise a first claw arm connected to the first side wall, second demoulding slots spaced apart from each other are provided in the first claw arm, and the second demoulding slots and the first demoulding slots are alternately arranged in the length direction.

5. The guide rail according to claim 4, wherein third demoulding slots spaced apart from each other are provided in the second side wall, and one of the third demoulding slots corresponds to a corresponding one of the second demoulding slots in the length direction.

6. The guide rail according to any one of claims 1 to 5, wherein reinforcing ribs are provided on the bottom wall and a side face of the first side wall facing away from the guide rail groove.

7. The guide rail according to any one of claims 1 to 6, the guide rail further comprising a mounting bracket fixedly connected to the guide rail body, wherein the mounting bracket is adapted to be mounted to a vehicle door.

8. The guide rail according to any one of claims 1-7, wherein the second side wall has a second edge away from the bottom wall; and
the limiting structure comprises a limiting plate positioned close to the second edge, and the limiting plate, the bottom wall and the second side wall enclose a second limiting groove facing the first side wall.

9. The guide rail according to claim 8, wherein fourth demoulding slots opposite the limiting plate are provided in the bottom wall.

10. A guide rail assembly, comprising:
a guide rail according to any one of claims 1-9; and
a sealing strip, wherein the sealing strip is limited in the guide rail groove of the guide rail by the limiting structure of the guide rail.

11. The guide rail assembly according to claim 10, wherein the guide rail comprises a claw, the guide rail body of the guide rail comprises a bottom wall and a first side wall extending outward from the bottom wall, and the first side wall and the claw enclose a first limiting groove; and
the sealing strip comprises an annular body and a first arm arranged on an outer peripheral wall of the annular body, the first arm is fitted with the first limiting groove, and the bottom wall and the claw respectively abut against either of opposite sides of the annular body in a height direction of the guide rail.

12. The guide rail assembly according to claim 11, wherein the guide rail further comprises a limiting plate, the guide rail body further comprises a second side wall opposite the first side wall, and the limiting plate, the bottom wall and the second side wall enclose a second limiting groove; and
the sealing strip further comprises a second arm arranged on the outer peripheral wall of the annular body, the second arm is fitted with the second limiting groove, and the limiting plate and the first side wall abut respectively against either of opposite sides of the annular body in a width direction of the guide rail.

13. A vehicle, comprising a guide rail assembly according to any one of claims 10-12.
